# EUROPEAN PATENT SPECIFICATION

(11) **EP 4 148 454 B1**
(45) Date of publication and mention of the grant of the patent: **08.07.2026**
(21) Application number: 21195596.8
(22) Date of filing: 08.09.2021
(51) Int. Cl.: G01S 7/40, G01S 13/50, G01S 13/87, G01S 13/00, G01S 13/46

(54) **METHODS OF EVALUATING RADAR DEVICES AND RADAR DEVICES**
VERFAHREN ZUR AUSWERTUNG VON RADARVORRICHTUNGEN UND RADARVORRICHTUNGEN
PROCÉDÉS D'ÉVALUATION DE DISPOSITIFS RADAR ET DISPOSITIFS RADAR

(43) Date of publication of application: 15.03.2023
(73) Proprietor: Infineon Technologies AG, 85579 Neubiberg (DE)
(72) Inventor: VAGARAPPAN ULAGANATHAN, Raghavendran, 81737 München (DE); BAHETI, Ashutosh, 81541 München (DE); JUNGMAIER, Reinhard-Wolfgang, 4072 Alkoven (AT); TROTTA, Saverio, 80538 München (DE)
(74) Representative: Kraus & Lederer PartGmbB

(56) References cited:
- EP-A1- 3 715 900
- CN-A- 112 698 319
- CZ-B6- 308 229
- US-A1- 2016 018 511

## Description

### TECHNICAL FIELD

The present application relates to methods of evaluating radar devices.

### BACKGROUND

Radar devices generally emit radar signals. These radar signals may then be reflected from objects, and the reflected radar signals may be received by the radar device. Based on these received radar signals, then presence of the objects as a well as their angular position with respect to the radar device, their velocity etc. may be determined, depending on implementation of the radar device and evaluation performed. Radar devices may be used in a variety of applications, for example in the field of navigation (for example airplane navigation or naval navigation), in home appliances for detecting the presence of users or for example also for gesture recognition, to give some examples.

Radar devices for many applications are nowadays often implemented using integrated radar chips. A particular implementation of radar devices may use two radar chips in a master-slave configuration, where the master chip both transmits and receives radar signals, whereas the slave chip only receives radar signals. Based on the received signals from the master chip and the slave chip, an angular position of an object may be detected. However, delays and jitter for the received signals in the slave chip may lead to a less accurate angle estimation of an object to be detected.

EP 3 715 900 A1 discloses a method for testing a radar device where a test target is moved through a field of view and angles of the test target with respect to the radar device is measured.

US 2016 / 018 511 A1 discloses a radar device including a master radar device and a slave radar device.

### SUMMARY

A method as defined in claim 1 is provided. The dependent claims define further embodiments and a use of the radar device.

According to an embodiment, a method for testing a radar device including a master radar device and a slave radar device is provided, comprising:
moving a test target through a field of view of the radar device,
measuring an angle of the test target with respect to the radar device at a plurality of positions,
evaluating the reliability of the measured angles by comparing the measured angles to respective actual angles where the test target is positioned, and
specifying at least one of a usable field of view of the radar device or a number of required repetitions for a reliable measurement based on the evaluating.

The above summary is merely intended to give a brief overview over some embodiments and is not to be construed as limiting, as other embodiments may include other features than the ones discussed above.

### BRIEF DESCRIPTION OF THE DRAWINGS

FIG. 1 is a block diagram illustrating a radar device which can be tested with methods according to embodiments.
FIG. 2 is a block diagram of a test setup usable in some embodiments.
FIG. 3 is a flowchart illustrating a method according to some embodiments.
FIGs. 4A, 4B and 5 show example measurements for illustrating embodiments.
FIG. 6 is a diagram illustrating a field of view of a radar device according to some embodiments.
FIGs. 7A and 7B illustrate measurement results illustrating some embodiments.
FIGs. 8A to 8C illustrate configuration of testable radar devices .
FIGs. 9A to 9D illustrate measurement results for the configurations of FIGs. 8A to 8C.
FIGs. 10A to 10E illustrate measurement analyses for illustrating embodiments.
FIG. 11 illustrates a comparison of different analyses for illustrating embodiments.

### DETAILED DESCRIPTION

In the following, various embodiments will be described referring to the attached drawings. These embodiments are given as illustrative examples only and are not to be construed as limiting. For example, while embodiments may be described including numerous features (elements, components, acts, events, method steps and the like), in other embodiments some of these features may be omitted or may be replaced by alternative features. Furthermore, in addition to the features explicitly described, further features may be provided, for example features of conventional radar devices. In particular, embodiments described herein focus on certain aspects of radar devices, for example related to the field of view of radar devices and an arrangement of receive portions related to the field of view. Other aspects and features of such radar devices may be implemented in a conventional manner and will therefore not be described in greater detail.

Radar devices as described herein may be continues wave (cw) radar devices, where radar signals are continuously emitted, or may be chirp based radar devices, where radar signals are emitted as so-called chirps with varying frequency. Other conventional approaches to emitting and receiving radar signals may also be used.

Radar devices disclosed herein per se are not claimed embodiments, but are radar devices that may be tested with the described methods.

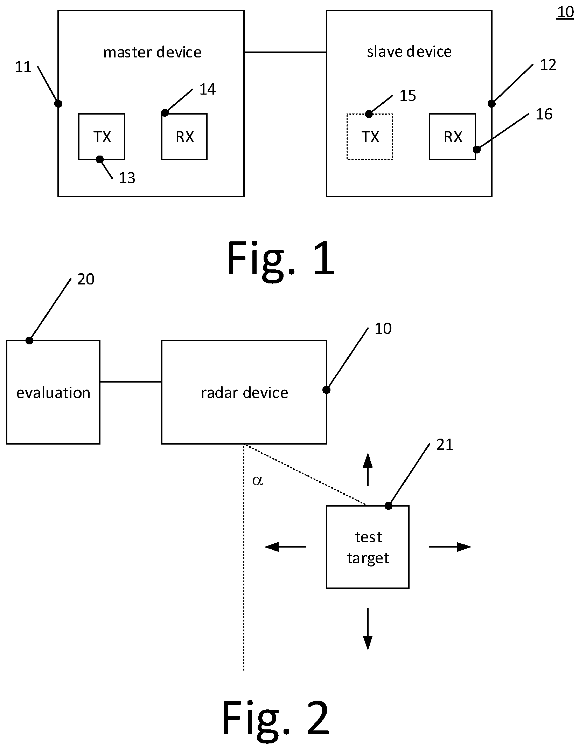

FIG. 1 is a block diagram illustrating a radar device 10, which is the basis for several embodiments discussed in the following. Radar device 10 includes a master device 11 and a slave device 12. Master device 11 may be implemented on a first chip die, and slave device 12 may be implemented on a second chip die different from the first chip die, or also may be implemented on the first chip die. Master device 11 may communicate with slave device 12 via one or more electrical connections. Master device 11 and slave device 12 may be provided in a common package of radar device 10.

Master device 11 includes a transmit portion 13, which may include one or more transmit antennas, to transmit radar signals, and a receive portion 14, which may include one or more receive antennas, for receiving reflected radar signals. Transmit portion 13 and receive portion 14 may be implemented in any conventional manner.

Slave device 12 includes a receive portion 16 for receiving radar signals. While slave device 12 in some implementations may also include a transmit portion 15, in the operation as master device 11 and slave device 12 transmit portion 15 is not active, i.e. not transmitting radar signals. In other embodiments, therefore transmit portion 15 may be omitted. Therefore, in operation, receive portion 16 receives radar signals transmitted by transmit portion 13 of master device 11. For synchronization, slave device 12 may for example receive a clock signal from master device 11, or master device 11 and slave device 12 may be clocked by a common clock signal. Such clock signals may exhibit a delay between master device 11 and slave device 12.

Based on the received radar signals at receive portion 14 and receive portion 16, an angular position of a target object from which the radar signals are reflected may be determined. In a simple version, differences in times (which relates to differences in path length between the target object and receive portions) at which corresponding reflected radar signals are received at receive portions 14, 16. This difference in path length between the receive portions (also referred to as cascaded receivers) directly relates to the angle of target object with respect to radar device 10 located. A more complex analysis may use techniques like beamforming in transmit portion 13, in receive portions 14 and 16 or both.

Time delays and timing jitter at slave device 12 may adversely affect the accuracy of the determination of the angle. To some extent, such effects and gain mismatch between master and slave device may be corrected by calculations, but nevertheless effects may be visible. The magnitude of such effects may also depend on the angle itself. Therefore, according to some embodiments a measurement is performed and evaluated to specify a usable field of view for a reader device like a radar device 10. Moreover, in some cases the angle a measurement may be basically correct, but as so-called outliers, i.e. measurement errors, may sometimes occur. In embodiments, based on an evaluation a number of repeated measurements to be used to compensate for such outliers may be determined. In other embodiments, other algorithmic measures may be taken.

FIG. 2 illustrates a device for determining a usable angular range of radar device 10. The setup of FIG. 2 includes a test target 21. Test target 21 may for example be a conical reflector for radar beams or any other element reflecting radar signals emitted by radar device 10.

Test target 21 may be moved to various angular positions (angle α in figure 2) with respect to radar device 10. In some embodiments, test target 21 may be moved only within a plane. This may correspond to various applications where an object to be detected essentially is in a plane. For example, in automotive applications, a radar device may be used to detect other vehicles, which are located on the ground (for example on the street), but not below ground or up in the air. In other examples, for the presence detection applications human being move around in rooms on the floor, so also here it may be assumed that in a plane for example 0.5 m above ground humans may be detected, without the need of detecting objects further up or below. Such a plane were targets are to be detected is also referred to as a target plane herein.

In other embodiments, test target 21 may move three-dimensionally.

Angle α is measured by radar device 10 as briefly explained above, and evaluation device 20 then compares the measured angled α with the actual angles under which the test target 21 is positioned. Evaluation device 20 may for example be implemented using a correspondingly programmed processor, application-specific integrated circuitry, a microcontroller or the like. In some implementations, evaluation device 20 may be integrated with radar device 10. In other embodiments, evaluation device 20 may be provided separately from radar device 10. Evaluation device 20 may also be provided remotely from radar device 10 and may receive measurement data from radar device 10 for example via the internet.

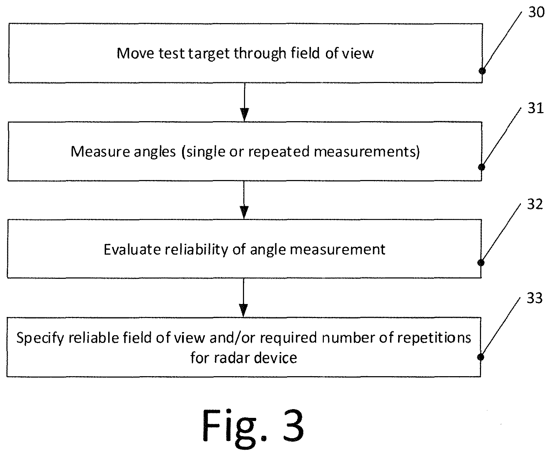

For further illustration, FIG. 3 is a flowchart illustrating a method according to an embodiment. The method of FIG. 3 may be implemented using the setup shown in FIG. 2 and will be described with respect to FIG. 2 to avoid repetitions. However, other test setups may also be used for implementing the method of FIG. 3.

At 30, a test target like test target 21 of FIG. 2 is moved through a field of view of a radar device like radar device 10. During this movement, at 31 angles are measured for different positions of the test target. In some implementations, a single measurement for each position may be performed. In other embodiments, the measurement may be repeated a plurality of times.

At 32, the reliability of the angle measurement is evaluated, for example by evaluation device 20 of FIG. 2. For this, the measurement angle is be compared with the actual angle where the test target is positioned.

At 33, a reliable field of view for radar device 10, i.e. a field of view where the angle may be determined with a sufficient predetermined accuracy, and/or a number of repetitions of measurements for an angle measurement to be valid, is specified, e.g. by evaluation device 30. Just to give an example, such a specification could indicate that radar device 10 may be used reliably with single repetitions in a range from -20° to +20° (measured as shown in FIG. 2 for angle α), and may be used in a range from -30° to -20° and +20° to +30° with five repetitions for each angle measurement. Also, not symmetrical ranges (not symmetrical with respect to 0) may also result. These and other concepts will be further illustrated using example measurements and example radar devices in the following.

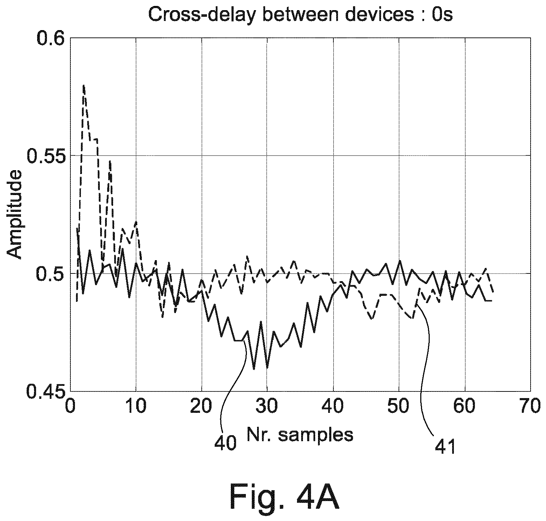

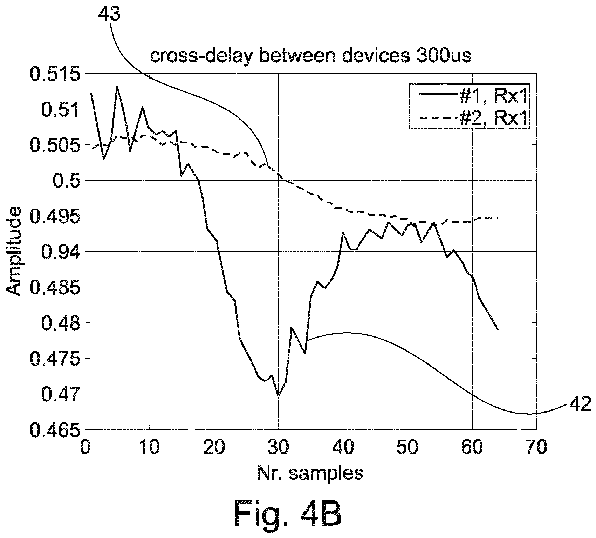

As mentioned previously, a delay present in a radar device like radar device 10 of FIG. 1 using a master device and a slave device, e.g. a delay between master device and slave device may affect the measurement. This will be illustrated referring to FIGs. 4A and 4B.

In FIG. 4A, a measured amplitude by a receiver portion of a device is plotted over a sample number (samples, i.e. measurement values, are consecutively taken) for an example measurement with an assumed delay of zero seconds between master device and slave device. A curve 40 illustrates an example measurement for master device 11, and a curve 41 shows an example measurement for slave device 12.

FIG. 4B shows similar measurements for an assumed cross delay between the devices of 300 µs, curve 42 showing example results for master device 11 and curve 43 showing example results for slave device 12. As can be seen, depending on delay the measurements are significantly different.

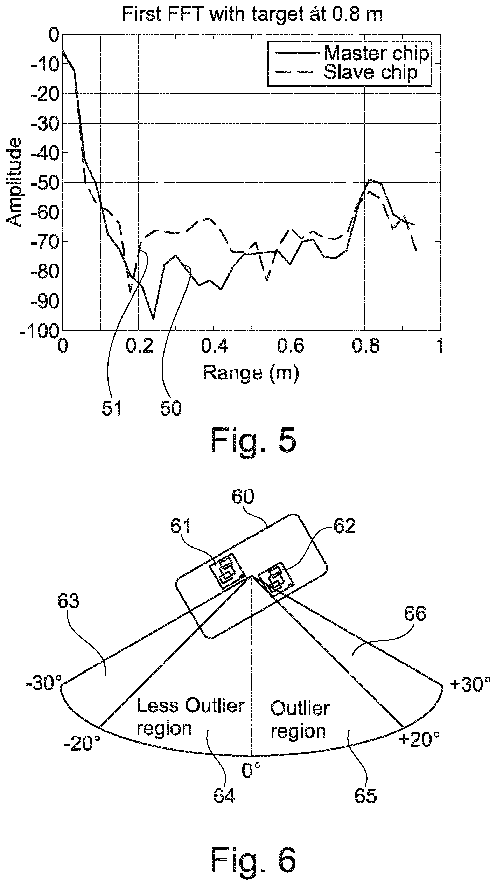

Fig. 5 shows measurement results for a case where the test target is placed at a distance of 0.8m from radar device 10. Curves show the amplitude over range (distance) determined based on a first fast Fourier transform (FFT), where a curve 50 shows results based on the signals received at the master device and a curve 51 shows results based on signals received at the slave device. In both cases a peak at the position of the target is visible. However, for the slave device a higher phase standard deviation was determined. Overall, cross delays and jitter between master device and slave device may lead to inaccurate measurement results.

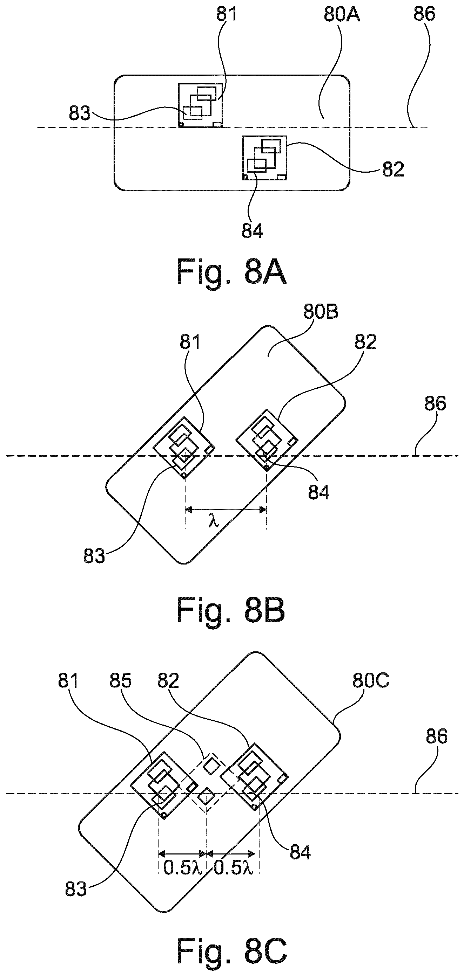

FIG. 6 illustrates an example field of view result for a radar device 60 including a first radar chip 61 and a second radar chip 62. Radar device 60 is placed as in Fig. 8B below, The reason for this will be explained in more detail below with Figs. 8A to 8C. First radar chip 61 and second radar chip 62 are examples for the master device 11 and slave device 12 of FIG. 1. Based on the method of FIG. 3, a usable field of view has been specified. In particular, for the example of FIG. 6, angle measurements are possible with a required accuracy in a range from -20° to +20° corresponding to a region 64 from -20° to 0° and a region 65 from 0° to +20°. As will be explained the number of outliers differs between regions 64 and 65. In regions beyond that, labeled 63 and 66 in FIG. 6, for example between -30° to -20° and +20° to +30°, measurement accuracy is too low in the example shown.

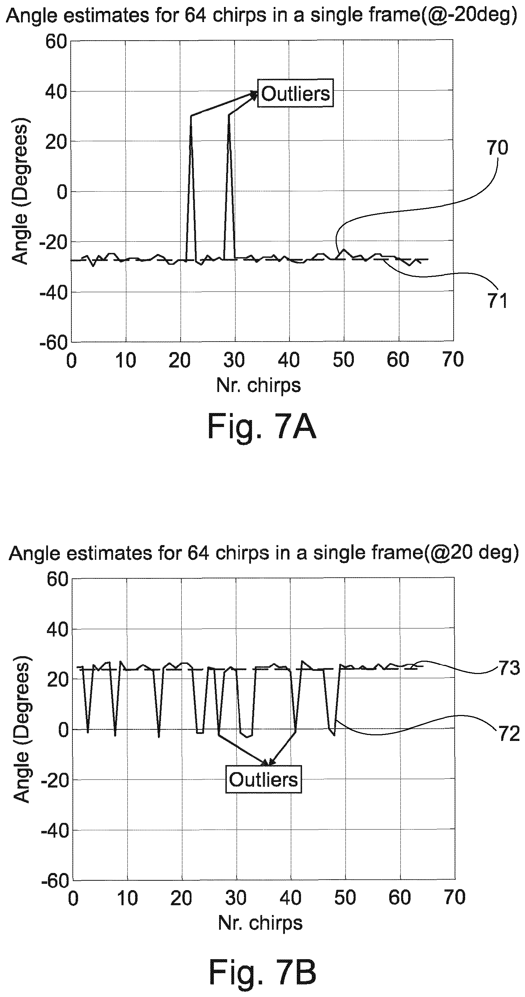

FIG. 7A shows an example measurement for 64 radar chirps for an angle of about -20° for radar device 60 of Fig. 6. A curve 70 shows the measured angle, whereas a curve 71 shows a trendline. As can be seen, apart from two outliers the measurements are correct, and therefore the angle may be measured with high accuracy. For a higher accuracy, in this case for example two or three measurements may be used, and the majority result may be used. Other algorithms will be discussed further below.

FIG. 7B shows a measurement results for the configuration of FIG. 6 for an angle of +20°. Here, while the general trendline 73 at an angle of slightly more than +20° may still be observed, a measurement curve 72 shows a significantly more outliers than for -20°. Therefore, while also here an accurate measurement may be performed, more samples (i.e. more chirps) need to be evaluated for a reliable measurement.

In such a case, at 33 in FIG. 3 it may for example be determined that the reliable field of view is from -20° to +20°, where from -20° to 0° (region 64) three measurements (chirps) are to be evaluated for a reliable measurement, whereas for region 65 (0° to +20°) a higher number of measurements (chirps), for example five or six measurements, need to be evaluated for reliability.

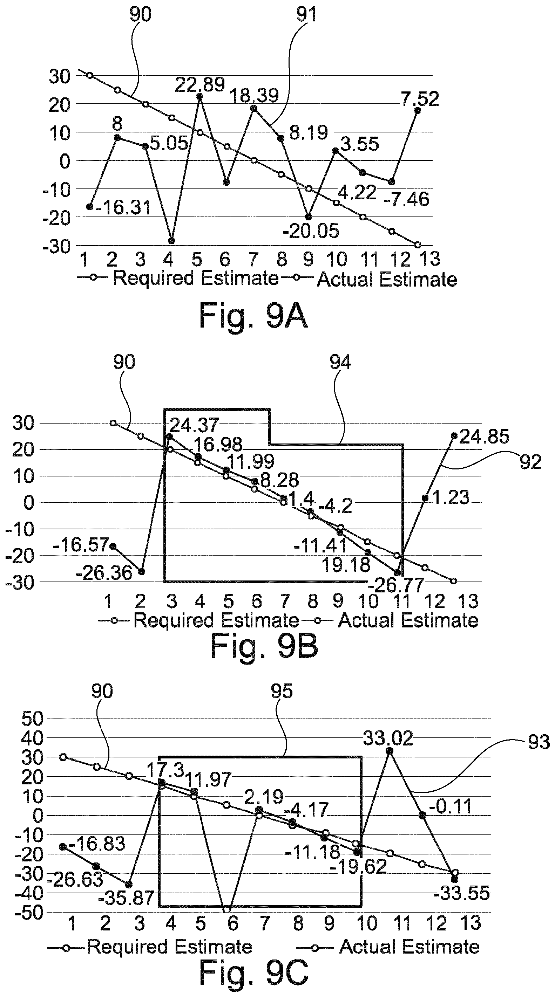

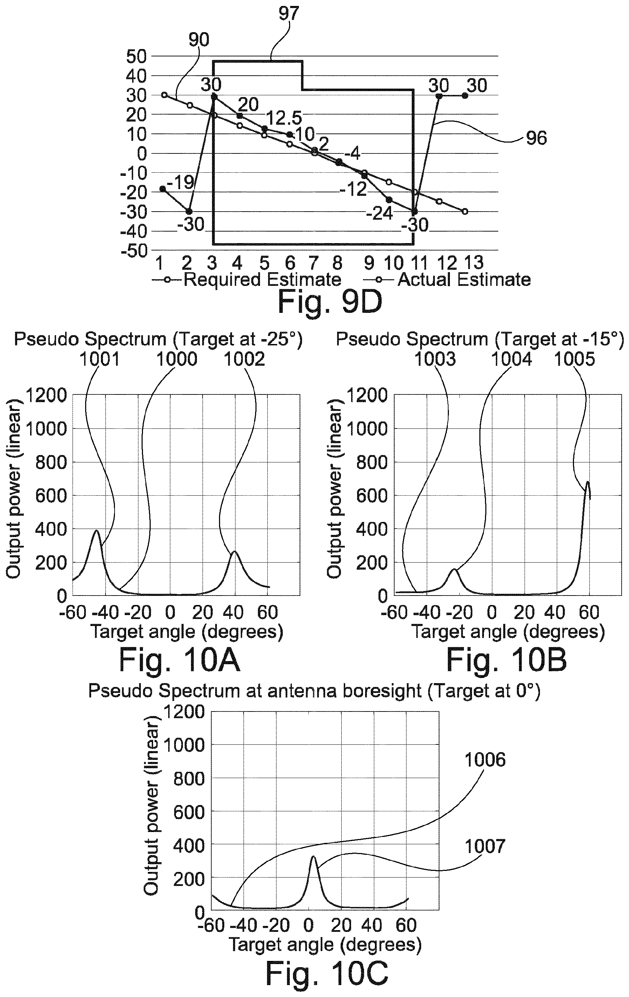

In radar device 60 of FIG. 6, chips 61, 62 are arranged in a somewhat offset fashion. In some embodiments, a radar device is arranged or orientated such that receive portion of a master radar device and a slave radar device are essentially arranged in a target plane, which in some embodiments may improve the usable field of view. "Essentially arranged" may indicate that at least part of the receive portions are located in the target plane, or in other words that the target plane passes through the receive portion. This will now be explained referring to FIG. 8, including subfigures 8A to 8C, and FIG. 9, including subfigures 9A to 9D.

FIG. 8A illustrates a radar device 80A, which essentially corresponds to radar device 60 of FIG. 6, in a first configuration and orientation. Radar device 80A includes a first radar chip 81 and a second radar chip 82. First radar chip 81 has a receive portion 83 for receiving radar signals, and second radar chip 82 has a receive portion 84 for receiving radar signals. First radar chip 81 also includes a transmit portion for transmitting radar signals, as explained with reference to FIG. 1 for master device 11. Second radar chip 82 may also include a transmit portion, which for the measurement discussed, however, is deactivated, as also discussed with reference to FIG. 1 for slave device 12. In some embodiments, apart from being operated as master and slave, radar chips 81, 82 may have the same design.

A target plane in which angles are to be detected by radar device 80A is indicated by a dashed line 86, which is a projection of the target plane to the plane shown in the drawing. As can be seen, in the configuration of FIG. 8A, receive portions 83, 84 are offset from target plane 86.

FIG. 9A shows measurement results for different angles. Generally, FIGs. 9A to 9D show the measured angle (y-axis) for a plurality of measurements plotted along the x-axis. A curve 90 illustrates the required angle estimate, i.e. the angle where a test target like test target 21 of FIG. 2 was located. A curve 91 in FIG. 9A shows the measurement results (actual angle estimates). As can be seen, the estimates are largely incorrect

FIG. 8B shows the radar device of FIG. 8A in a second configuration 8B, where the radar device is rotated with respect to the target plane 86 such that both receive portions 83, 84 are located essentially in the target plane, with a distance λ therebetween, which may correspond to a wavelength used . Through the rotation, sides of rectangular shapes of chips 81, 82 intersect the target plane 86 at angles different from 90°.FIG. 9B shows measurement results in a curve 92. As can be seen, at least for a field of view ranging between approximately -25° and +25°, the measurement is quite accurate. Numeral 94 indicates a corresponding useable field of view. Therefore, in embodiments, receive portions of master device and slave device are arranged essentially in a target plane, or, to put it differently, angles are determined in a plane including the receive portions of the first and second radar devices, radar chips in case of FIG. 8B.

FIG. 8C shows a further configuration 80C of the radar device. Here, based on signals from the first and second chips 81, 82, a virtual channel 85 is formed in a distance 0.5 therebetween. Receive portions 83 and 84 are still provided in target plane 86.

Providing virtual channels, a technique where based on to receive arrays of antennas (for example in receive portions 83, 84) a virtual array is calculated. Details may for example be found in M.A. Richards, virtual arrays, part 2: virtual arrays and co-arrays, February 2019, available on www.radarsp.com.

FIG. 9B shows corresponding measurement results without additional measures. Here, in a range from approximately -20° to +20°, correct results are obtained as indicated by an area 95 (usable field of view), but outliers may happen. An area 94 indicates a corresponding useable field of view.

As already briefly discussed referring to FIGs 7A and 7B, by using repeated measurements and corresponding algorithms for processing (averaging, majority vote or the like), the influence of such outliers can be reduced. A particular group of algorithms usable are the Capon algorithms. A Capon algorithm was applied with and without Doppler compensation, and with snapshots taken over the frames to compute a covariance matrix. Angle estimation can be improved with increasing the number of target snapshots over the frames considering that target is static for whole period of evaluation. It should be noted that Doppler compensation may be useful for movable target, but does not influence the measurement results shown, where static targets were used.

With the Capon algorithm, outliers were suppressed. An example result is shown in FIG. 9D, which illustrates measurement results of for the configuration of FIG.8C with applied Capon algorithm. Here, a good field of view may be obtained as indicated by 97 in a range from about +40° to - 40° Angle accuracy decreases when target is moved away from the antenna boresight.. These angle deviations can be corrected by further post-processing.

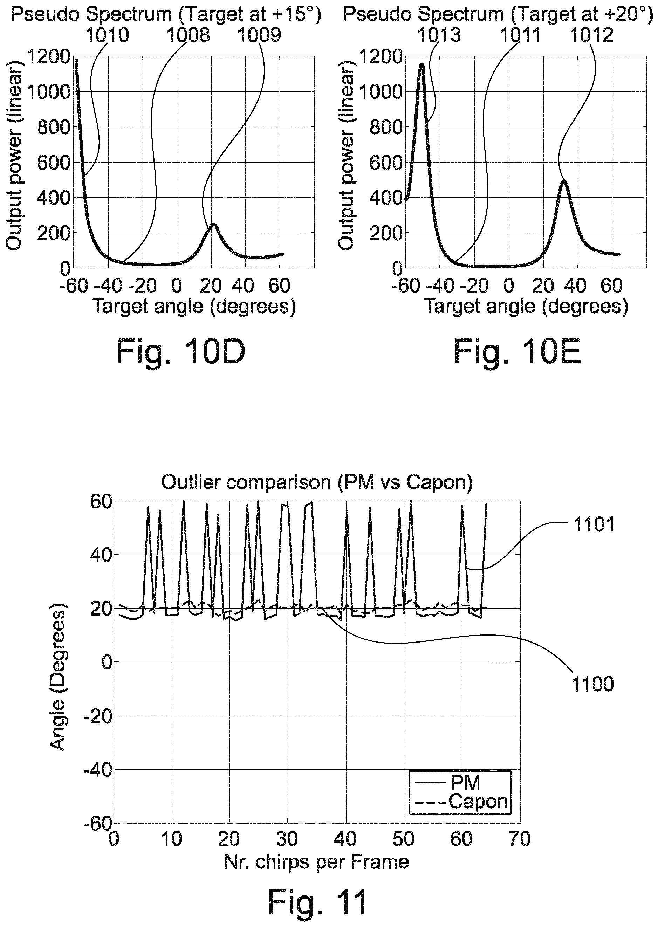

For further illustration, FIGs. 10A to 10E shows pseudo-spectra obtained based on the application of the Capon algorithm for different angles α of a test target. In FIG. 10A, the test target was at -25°, in FIG. 10B at -15°, in FIG. 10C at 0°, in FIG. 10D at +15° and in FIG. 10E at +20°.

In FIG. 10C, a curve 1006 shows the pseudo-spectrum (output power calculated based on Capon algorithm over target angle). Here, a single peak 1007 appears at above 0°, indicating the target at 0°.

In spectrum 1003 in FIG. 10B and spectrum 1008 in FIG. 10D, besides a peak approximately at the target angle (peak 1004 in FIG. 10B and peak 1009 in FIG. 10D), so-called grating lobes 1005, 1010 begin to appear. These start to influence the measurement. At higher angles, this makes the measurement unreliable or impossible. For example, in a spectrum 1000 in FIG. 10A, only two grating lobes 1001, 1002 appear at angles significantly different from the target angle of -25°. In FIG. 10E, while a peak 1012 may still be associated with the target angle, it is already shifted significantly from 20°, and at this an additional grating lobe peak 1013 appears with higher output power.

Therefore, it can be seen that the usable field of view is limited even when applying the Capon algorithm.

FIG. 11 illustrates a comparison between an evaluation without Capon algorithm (curve 1101; phase monopole evaluation) and an evaluation with Capon algorithmic (curve 1100). As can be seen, with Capon algorithm the accuracy may be significantly improved for the configuration of FIG. 8C using a virtual channel. The test target in FIG. 11 was at +20°.

Therefore, as can be seen, by post-processing such as applying the Capon algorithm, the accuracy can be increased, in particular in case of a virtual channel as in FIG. 8C.

## Claims

1. A method for testing a radar device (10; 60; 80 A-C), comprising:
moving a test target (21) through a field of view of the radar device (10; 60; 80 A-C), and
measuring an angle (α) of the test target (21) with respect to the radar device (10; 60; 80 A-C) at a plurality of positions,
**characterized in that**
the radar device (10; 60; 80 A-C) includes a master radar device (11; 61; 81) and a slave radar device (12; 62; 82),
and **in that** the method further comprises:
evaluating the reliability of the measured angles by comparing the measured angles (α) to respective actual angles where the test target (21) is positioned, and
specifying at least one of a usable field of view (64; 65) of the radar device (10; 60; 80 A-C)or a number of required repetitions for a reliable measurement based on the evaluating.

2. The method of claim 1, wherein moving the test target (21) through the field of view includes moving the test target (21) in a target plane.

3. The method of claim 1 or 2, wherein specifying the usable field of view comprises specifying the usable field of view taking a post-processing algorithm into account.

4. The method of claim 3, wherein the post-processing algorithm comprises a Capon algorithm.

## Patentansprüche

1. Verfahren zum Testen einer Radarvorrichtung (10; 60; 80 A-C), umfassend:
Bewegen eines Testziels (21) durch ein Sichtfeld der Radarvorrichtung (10; 60; 80 A-C), und
Messen eines Winkels (α) des Testziels (21) in Bezug auf die Radarvorrichtung (10; 60; 80 A-C) an einer Vielzahl von Positionen,
**dadurch gekennzeichnet, dass**
die Radarvorrichtung (10; 60; 80 A-C) eine Master-Radarvorrichtung (11; 61; 81) und eine Slave-Radarvorrichtung (12; 62; 82) beinhaltet,
und dadurch, dass das Verfahren ferner umfasst:
Bewerten der Zuverlässigkeit der gemessenen Winkel durch Vergleichen der gemessenen Winkel (α) mit jeweiligen tatsächlichen Winkeln, an denen das Testziel (21) positioniert ist, und
Spezifizieren mindestens eines von einem nutzbaren Sichtfeld (64; 65) der Radarvorrichtung (10; 60; 80 A-C) oder einer Anzahl von erforderlichen Wiederholungen für eine zuverlässige Messung basierend auf dem Bewerten.

2. Verfahren nach Anspruch 1, wobei das Bewegen des Testziels (21) durch das Sichtfeld das Bewegen des Testziels (21) in einer Zielebene beinhaltet.

3. Verfahren nach Anspruch 1 oder 2, wobei das Spezifizieren des nutzbaren Sichtfelds das Spezifizieren des nutzbaren Sichtfelds unter Berücksichtigung eines Nachbearbeitungsalgorithmus umfasst.

4. Verfahren nach Anspruch 3, wobei der Nachbearbeitungsalgorithmus einen Capon-Algorithmus umfasst.

## Revendications

1. Un procédé de test d'un dispositif (10 ; 60 ; 80 A-C) radar, comprenant :
déplacer une cible (21) de test dans un champ de visibilité du dispositif (10 ; 60 ; 80 A-C) radar, et
mesurer un angle (α) de la cible (21) de test par rapport au dispositif (10 ; 60 ; 80 A-C) radar en pluralité de positions, **caractérisé en ce que**
le dispositif (10 ; 60 ; 80 A-C) radar comprend un dispositif (11 ; 61 ; 81) radar maître et un dispositif (12 ; 62 ; 82) radar esclave,
et **en ce que** le procédé comprend en outre :
évaluer la fiabilité des angles mesurés en comparant les angles (α) mesurés à des angles réels respectifs où la cible (21) de test est en position, et
préciser au moins l'un d'un champ de visibilité (64 ; 65) pouvant être utilisé du dispositif (10 ; 60 ; 80 A-C) radar ou un nombre de répétitions requises pour une mesure fiable sur la base de l'évaluation.

2. Le procédé de la revendication 1, dans lequel déplacer la cible (21) de test dans le champ de visibilité comprend déplacer la cible (21) de test dans un plan de cible.

3. Le procédé de la revendication 1 ou 2, dans lequel préciser le champ pouvant être utilisé de visibilité comprend préciser le champ pouvant être utilisé de visibilité en prenant en compte un algorithme de post-traitement.

4. Le procédé de la revendication 3, dans lequel l'algorithme de post-traitement comprend un algorithme de Capon.
